# EUROPÄISCHE PATENTANMELDUNG

(11) **EP 0 967 569 A2**
(43) Veröffentlichungstag der Anmeldung: **29.12.1999**
(21) Anmeldenummer: 99111547.8
(22) Anmeldetag: 15.06.1999
(51) Int. Cl.: G06K 19/077

(54) **Vorrichtung zum Abtrennen eines Chips von einer einen Magnetstreifen aufweisenden Chipkarte**

(30) Priorität: 27.06.1998 DE 19828792
(71) Anmelder: Ernst Reiner GmbH & Co. KG, 78120 Furtwangen (DE)
(72) Erfinder: Waldvogel, Wolfgang, 78120 Furtwangen (DE); Zapf, Thomas, 78120 Furtwangen (DE); Nopper, Guido, 78120 Furtwangen (DE)
(74) Vertreter: Schmitt, Hans, Dipl.-Ing.

(57) **Zusammenfassung**

Eine Vorrichtung (1) ist als Bau- und Handhabungseinheit gleichzeitig eine Chipstanze, mit der Chips (2) aus Chipkarten (4) herausgetrennt werden können, und eine Löschvorrichtung für auf Magnetstreifen (3) solcher Chipkarten (4) gespeicherter Daten. Sie weist dazu eine Aufnahmeöffnung (7) und einen Einführschlitz (9) für die Chipkarte (4), ferner ein Stanzwerkzeug (5) und außerdem einen Löschmagneten (15) auf, an welchem der Magnetstreifen (3) der Chipkarte (4) beim Einschieben in die Stanzposition vorbeibewegt wird. Ist die Stanzposition erreicht, kann der Chip (2) ausgestanzt werden, wonach die Chipkarte (4) sowohl betreffend den Chip als auch die Daten auf dem Magnetstreifen (3) entwertet ist.

## Beschreibung

Die Erfindung betrifft eine Vorrichtung zum Entfernen oder Abtrennen eines Chips von einer insbesondere einem Recycling-Vorgang zuführbaren, zusätzlich zu dem Chip einen Magnetstreifen für Datenspeicherung aufweisenden Chipkarte, mit einem Stanzwerkzeug, dessen Umriß oder Querschnitt gleich oder größer als die übliche oder Normgröße eines Chips mit seinen ihm zugehörenden Kontaktflächen oder Kontaktplättchen ist, und mit einer Aufnahmeöffnung für die dem Stanzwerkzeug zuzuführende Chipkarte.

Eine derartige Vorrichtung ist aus DE-GM 296 15 032.0 bekannt. Damit ist es möglich, den Chip einer Chipkarte in einem einzigen Trennvorgang aus der Chipkarte herauszustanzen, so daß diese dann einer Wiederverwertung ihres Werkstoffes (Recycling) zugeführt werden kann und nur der Chip mit seinen Kontaktplättchen und gegebenenfalls noch einem schmalen, aus Kartenwerkstoff bestehenden Rand als Sondermüll anfällt. Dabei sind derartige Chipkarten oder auch sonstige Plastikkarten mit Magnetstreifen insbesondere im Format ID-1, das heißt in den Abmessungen 85,5 x 55 x 0,76 weltweit millionenfach in Gebrauch. Aus Sicherheitsgründen wird die Gültigkeitsdauer solcher Plastikkarten beschränkt. Die Frist wird anwendungsbezogen auf wenige Monate bis einige Jahre festgelegt.

Nach Fristablauf soll die Karte eingezogen und entwertet werden, das heißt der Chip soll in der erwähnten Weise ausgestanzt werden, damit die recyclingfähigen Stoffe der Plastikkarte einer Wiederverwendung zugeführt werden können, wobei nach dem Ausstanzen aber zumindest Teile der Daten auf einem zusätzlich vorhandenen Magnetstreifen gespeichert bleiben.

Zwar ist aus der US-A-4 711 993 eine Anordnung bekannt, bei welcher die Daten eines Magnetstreifens mit Hilfe eines Löschmagneten partiell gelöscht werden können, um Platz für eine neue Datenspeicherung zu schaffen. Dadurch können aber die Daten nicht vollständig gelöscht und insbesondere die auf einem Chip befindlichen Daten nicht entfernt werden.

Ferner ist aus US-A-5 061 842 eine Vorrichtung zum Löschen der Daten von Magnetstreifen mit Hilfe eines Löschmagneten bekannt, die aber ebenfalls nicht dazu geeignet ist, bei einer Chipkarte den Chip zu entfernen und damit dessen Daten zu vernichten.

Es besteht deshalb die Aufgabe, eine Vorrichtung der eingangs genannten Art zu schaffen, mit welcher erreicht werden kann, daß nach dem Ausstanzen des Chips die Daten des Magnetstreifens nicht oder nicht mehr vollständig lesbar sind.

Die überraschende Lösung dieser Aufgabe besteht darin, daß bei einer Vorrichtung der eingangs genannten Art im Bereich der Aufnahmeöffnung wenigstens ein Löschmagnet angeordnet ist, dessen Magnetfeld den Magnetstreifen der Chipkarte beim Einführen oder Einlegen in die Aufnahmeöffnung ganz oder teilweise beaufschlagt und daß die Vorrichtung einen zu der Aufnahmeöffnung führenden Einführschlitz zum Einschieben der Chipkarte in die Aufnahmeöffnung und in den Bereich des Stanzwerkzeuges aufweist und der/die Löschmagnete an dem Einführungsschlitz oder diesem unmittelbar benachbart angeordnet ist(sind) und die Chipkarte beim Einschieben mit ihrem Magnetstreifen, zumindest mit einem größeren Teil von dessen Erstreckung an dem/den Löschmagneten vorbeibewegbar ist.

Auf überraschend einfache und auch preiswerte Weise kann also die Vorrichtung dahingehend ausgestaltet werden, daß das Zuführen der Chipkarte zu dem Stanzwerkzeug gleichzeitig zu einer Zerstörung von auf dem Magnetstreifen gespeicherten Daten führt, so daß insgesamt eine zuverlässige Entwertung einer solchen Plastikkarte erfolgt.

Dabei wird in vorteilhafter und zweckmäßiger Weise der Magnetstreifen automatisch über den größten Teil seiner Erstreckung an dem oder den Löschmagneten vorbeigeführt und die auf ihm enthaltenden Daten werden gelöscht, wenn die Chipkarte in bestimmungsgemäßer Weise in die Vorrichtung so eingeführt wird, daß der Chip ausgestanzt werden kann. Schon beim Einführen der Karte werden die Daten des Magnetstreifens gelöscht und in der Endstellung kann dann der Chip auf einfache Weise etwa in der Weise ausgestanzt werden, wie es aus DE-GM 296 15 032.0 bekannt ist. Da bekannte Stanzgerät braucht also nur im Bereich seines Einführschlitzes den oder die Löschmagnete zu erhalten, um die zusätzliche Funktion zu erhalten, die Daten eines Magnetstreifens schon beim Einführen oder Einlegen der Chipkarte löschen zu können.

In vorteilhafter Weise kann dabei die Vorrichtung auch zum Entwerten von Plastikkarten benutzt werden, die nur einen Magnetstreifen, aber keinen Chip aufweist. Sie können einfach in die Vorrichtung eingeführt werden, wodurch ebenfalls auf dem Magnetstreifen befindliche Daten ganz oder mindestens in erheblichem Umfang gelöscht werden.

In gleicher Weise können auch Chipkarten, die keinen Magnetstreifen aufweisen, mit der erfindungsgemäßen Vorrichtung entwertet werden, weil auch bei solchen Karten der Chip ausgestanzt werden kann.

Der oder die Löschmagnete können Dauermagnete oder Elektromagnete sein, wobei auch mehrere solche Magnete vorhanden und eventuell unterschiedliche Löschmagnete kombiniert sein können. Somit können sie in einer Weise angeordnet und installiert werden, daß die angestrebte Löschung oder Teillöschung zuverlässig erreicht wird.

Eine konstruktiv einfache Lösung ergibt sich, wenn der oder die Löschmagnete in einer Aussparung angeordnet und außer an seiner der Chipkarte zugewandten Seite ringsum mit einer Abschirmung, insbesondere mit einer magnetisch leitenden Umhüllung, zum Beispiel aus Weicheisen, versehen ist. Dadurch können unerwünschte Wirkungen des Löschmagnetsystemes auf die Umgebung vermieden werden. In gezielter Weise wird eine Löschung nur an einem Magnetstreifen einer Karte bewirkt, die bewußt in die Vorrichtung und deren Aufnahmeöffnung eingeführt wird.

Damit dabei eine größtmögliche Wirkung erzielt wird, kann die nicht abgeschirmte Seite oder Fläche des oder der Löschmagneten mit der Begrenzungswand des Einführschlitzes oder der Aufnahmeöffnung bündig oder geringfügig versenkt sein. Diese nicht abgeschirmte Magnetfläche bildet somit einen Teil der Begrenzung des Einführschlitzes bzw. der Aufnahmeöffnung für die Chipkarte und kommt somit dem Magnetstreifen beim Einführen oder Einlegen der Chipkarte so nah wie möglich, so daß eine entsprechend gute Löschwirkung erzielt wird, ohne das Einschieben der Chipkarte durch den Löschungsmagneten zu behindern.

An der Aufnahmeöffnung oder an dem Einführschlitz kann an der der nicht abgeschirmten Seite des Löschmagneten gegenüberliegenden Seite oder Begrenzung eine weitere Abschirmung insbesondere aus magnetisch leitendem Werkstoff, zum Beispiel aus Weicheisen, vorgesehen sein und die Chipkarte kann zwischen dem Löschmagneten und dieser gegenüberliegenden Abschirmung auf ihrem Weg in die Aufnahmeöffnung und unter das Stanzwerkzeug hindurchbewegbar sein. Dadurch wird die Abschirmung des Löschmagnetsystemes ergänzt, um unzulässige Störungen und unerwünschte Wirkungen auf die Umgebung noch besser auszuschließen.

Weitere Ausgestaltungen der Vorrichtung sind in den Ansprüchen 6 bis 13 enthalten.

Anspruch 6 enthält mehrere Möglichkeiten der Anordnung der Löschmagnete relativ zum Einführschlitz, wobei die Anordnung unterhalb des Einführschlitzes in der Regel zu bevorzugen ist, weil beim Einführen einer Chipkarte zum Ausstanzen des Chips dieser meistens nach oben und somit der Magnetstreifen nach unten orientiert sind.

Anspruch 7 enthält eine Möglichkeit zur Verstärkung des Löschmagnetsystemes, indem beidseits des Weges für die Chipkarte, also sowohl oberhalb als auch unterhalb jeweils wenigstens ein Löschmagnet angeordnet ist.

Anspruch 8 bezieht sich auf einen zusätzlichen Einführtrichter, der das Einführen der Chipkarte in den Einführ- oder Aufnahmeschlitz erleichtert.

Anspruch 9 gibt eine Lösung an, bei welcher die Chipkarte mit ihrem in Einschubrichtung hinteren Eckbereich, der nicht mit dem Magnetstreifen versehen ist, selbst dann frei zugänglich bleibt, wenn die Chipkarte in Stanzposition verschoben ist. Um so leichter kann sie gehandhabt und auch wieder aus der Vorrichtung entnommen werden.

Dabei kann die dem/den Löschmagneten nähere Seitenführung länger als die dazu parallele Seitenführung sein, um im Bereich des Magnetstreifens einen entsprechend langen Einschubweg zu bilden.

Anspruch 11 enthält eine Lösung für ein Löschmagnetsystem mit Jochen, die beim Löschvorgang auf den Magnetstreifen einwirken.

Anspruch 12 bezieht sich auf die Anordnung des oder der Löschmagnete in Relation zur Abmessung der Chipkarte in ihrer Einführrichtung und gibt eine Maßnahme an, durch welche der oder die Löschmagnete über einen größtmöglichen Abschnitt des Magnetstreifen beim Einführen auf diesen einwirkt, wobei in eingeführtem Zustand der Löschmagnet auf den Endbereich des Magnetstreifens weiterhin auch während des Stanzvorganges einwirken kann.

Anspruch 13 enthält einen Hinweis auf die Abmessung des Löschmagneten quer zur Einführrichtung in Relation zur Breite des Magnetstreifens der Chipkarte.

Insgesamt ergibt sich bei Kombination einzelner oder mehrerer der vorbeschriebenen und in den Ansprüchen enthaltenen Merkmale und Maßnahmen eine Vorrichtung der eingangs genannten Art, die einfach im Aufbau und in der Handhabung ist und sich von Vorrichtungen nur zum Ausstanzen des Chips eigentlich in der Bedienung nicht unterscheidet, trotzdem aber auch das Löschen oder mindestens Teil-Löschen der Daten eines Magnetstreifens einer solchen Karte erlaubt, ohne daß der Benutzer zusätzliche Handhabungen oder Maßnahmen durchführen muß, allenfalls abgesehen vom Einschalten des Stromes für den Fall, daß der Löschmagnet ein Elektromagnet ist. Auch dieses Einschalten des Stromes könnte jedoch automatisiert sein und durch das Einschieben der Chipkarte bewirkt werden.

Nachstehend sind Ausführungsbeispiele der Vorrichtung zum Entwerten von Plastikkarten, insbesondere Chipkarten und/oder mit Magnetstreifen versehenen Karten, anhand der Zeichnung näher beschrieben. Es zeigt in zum Teil schematisierter Darstellung:
- Fig.1: einen Längsschnitt einer erfindungsgemäßen Vorrichtung zum Ausstanzen einer einen Chip und die Kontaktplättchen enthaltenden Ronde aus einer Chipkarte in einer Position, in welcher dieser Stanzvorgang bereits durchgeführt ist, wobei eine Chipkarte bis an einen stirnseitigen Anschlag in die Vorrichtung an einem Löschmagneten vorbei eingeschoben ist und als Löschmagnet ein Permanentmagnet vorgesehen ist,
- Fig.2: eine der Fig.1 entsprechende Darstellung, bei welcher der Löschmagnet ein Elektromagnet und zwar ein Wechselstrommagnet ist,
- Fig.3: eine Draufsicht der Vorrichtung, wobei die Chipkarte am Anfang der Einschubbewegung und strichpunktiert in ihrer eingeschobenen Lage mit Blick auf den Chip gezeigt ist, während der dem Chip gegenüberliegenden Seite angeordnete Magnetstreifen mit unterbrochenen Linien angedeutet ist,
- Fig.4: eine teilweise im Schnitt gehaltene Stirnansicht der Vorrichtung mit Blick auf den Einführschlitz, wobei der Teilschnitt durch den als Dauermagnet ausgebildeten Löschmagneten und dessen Abschirmungen verläuft und die Chipkarte eingeschoben wird oder bereits eingeschoben ist,
- Fig.5: eine den Figuren 1 und 2 entsprechende Darstellung, bei welcher jedoch der Löschmagnet im Gegensatz zu den Anordnungen nach Fig.1 bis 4 oberhalb des Einführschlitzes angeordnet ist sowie
- Fig.6: eine teilweise im Querschnitt gehaltene Stirnansicht mit einem Löschmagneten in Jochausführung, wobei der Magnet selbst seitlich des Einführschlitzes angeordnet ist und seine Joche bis in den Bereich des Einführschlitzes oberhalb und unterhalb des Magnetstreifens der eingeführten Chipkarte reichen.

In der nachfolgenden Beschreibung erhalten hinsichtlich ihrer Funktion übereinstimmende Teile auch bei abweichender Ausgestaltung übereinstimmende Bezugszahlen.

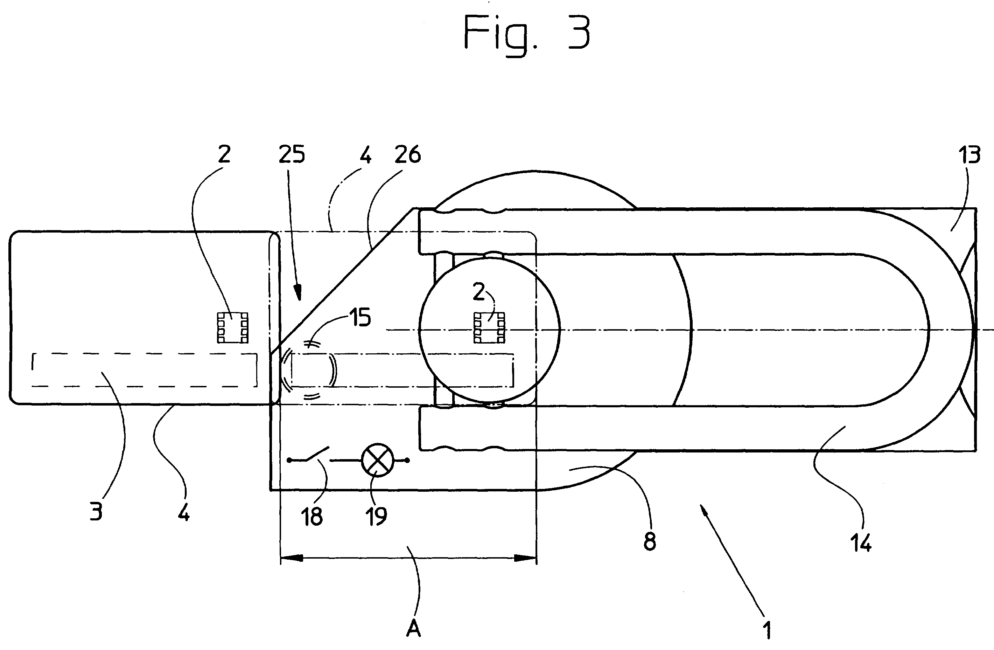

Eine im ganzen mit 1 bezeichnete Vorrichtung dient zum Entfernen oder Abtrennen eines zum Beispiel in Fig.3 gut erkennbaren Chips 2 von einer einem Recyclingvorgang zuführbaren, zusätzlich zu dem Chip 2 einen Magnetstreifen 3 für Datenspeicherung aufweisenden Chipkarte 4. Die Vorrichtung 1 entspricht in ihrem Aufbau, was das Entfernen oder Abtrennen des Chips 2 bzw. sein Ausstanzen betrifft, der in DE-GM 296 15 032.0 beschriebenen Vorrichtung. Auch der Aufbau der Chipkarte 4 ist in diesem Gebrauchsmuster beschrieben.

Zu der Vorrichtung 1 gehört demgemäß eine Matritze 5 und ein relativ dazu bewegbares Stanzwerkzeug 6, dessen Umriß oder Querschnitt gleich oder größer als die übliche oder Normgröße des auszustanzenden Chips 2 mit seinen ihm zugehörigen Kontaktflächen oder Kontaktplättchen ist.

Damit ein Benutzer die Stanzstelle nicht selbst bestimmen und "treffen" muß, ist die Matritze 5 in einer mit Anschlägen für die Chipkarte 4 begrenzten Aufnahmeöffnung 7 angeordnet und das Stanzwerkzeug 6 ist etwa rechtwinklig zu der zwischen den Anschlägen der Aufnahmeöffnung 7 befindlichen Ebene und damit rechtwinklig zu der Chipkarte 4 bewegbar.

In den Figuren erkennt man, daß die Vorrichtung 1 ein Gehäuse 8 zur Lagerung und Führung des bewegbaren Stanzwerkzeuges 6 und der Matritze 5 hat und daß an diesem Gehäuse 8 ein zu der Aufnahmeöffnung 7 führender Aufnahmeschlitz oder Einführschlitz 9 angeordnet ist, dessen Breite etwa der Breite der Chipkarte 4 entspricht und dessen schmale Begrenzungen 10 sich in die Seitenanschläge 11 der Aufnahmeöffnung 7 fortsetzen. Neben den Seitenanschlägen 11 ist ein stirnseitiger Anschlag 12 vorgesehen, der dem Einführschlitz 9 gegenüberliegt und den Weg A der Chipkarte 4 bei ihrem Einführen in die Aufnahmeöffnung 7 begrenzt.

Die Vorrichtung 1 ist dabei im Ausführungsbeispiel als handbedienbares Tischgerät ausgebildet. Die Matritze 5 ist in einem Standfuß 13 angeordnet, der zu dem Gehäuse 8 gehört und das Stanzwerkzeug 6 wird mit einem Handhebel 14 bedient und gegen die Kraft einer Rückstellfeder 17 abwärtsgedrückt.

In allen Figuren erkennt man, daß im Bereich der Aufnahmeöffnung 7 hinter dem Einführschlitz 9 ein Löschmagnet 15 angeordnet ist, der den Magnetstreifen 3 der Chipkarte 4 beim Einführen, also beim Verschieben aus der in Fig.3 mit durchgezogenen Strichen dargestellten Lage in die mit strichpunktierten Linien gezeichnete Position in der Aufnahmeöffnung 7 beaufschlagt. Dieser Löschmagnet 15 ist also relativ zu der Aufnahmeöffnung 7 und zu dem Einführschlitz 9 so positioniert, daß beim Einschieben der Chipkarte 4 deren Magnetstreifen 3 automatisch entlang diesem Löschmagneten 15 bewegt wird. Somit führt das Einführen der Chipkarte 4 in die Vorrichtung 1 zur Vorbereitung des Ausstanzens des Chips 2 automatisch zum Löschen oder zumindest zum weitgehenden Löschen von auf dem Magnetstreifen 3 befindlichen Daten.

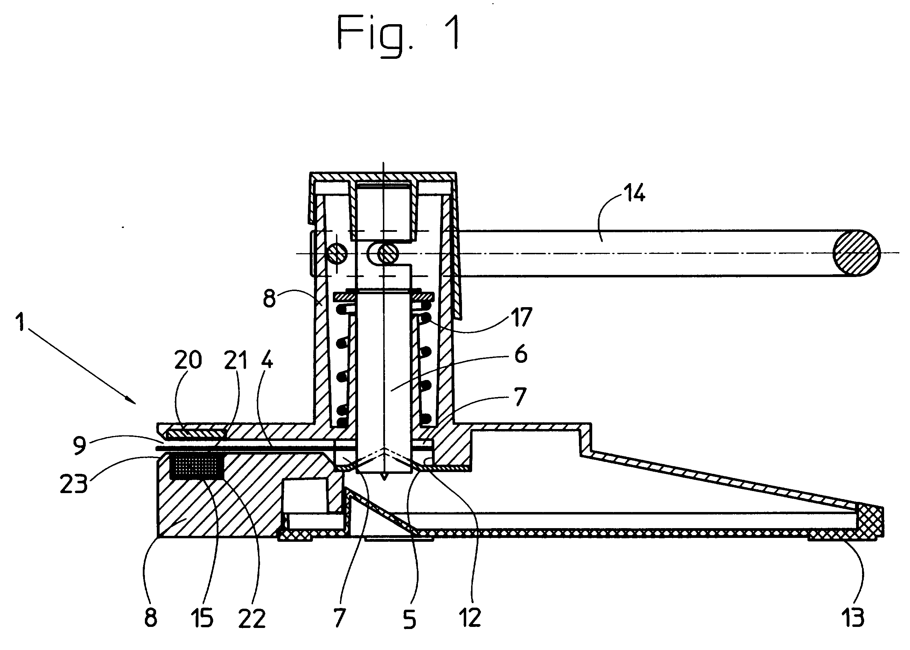

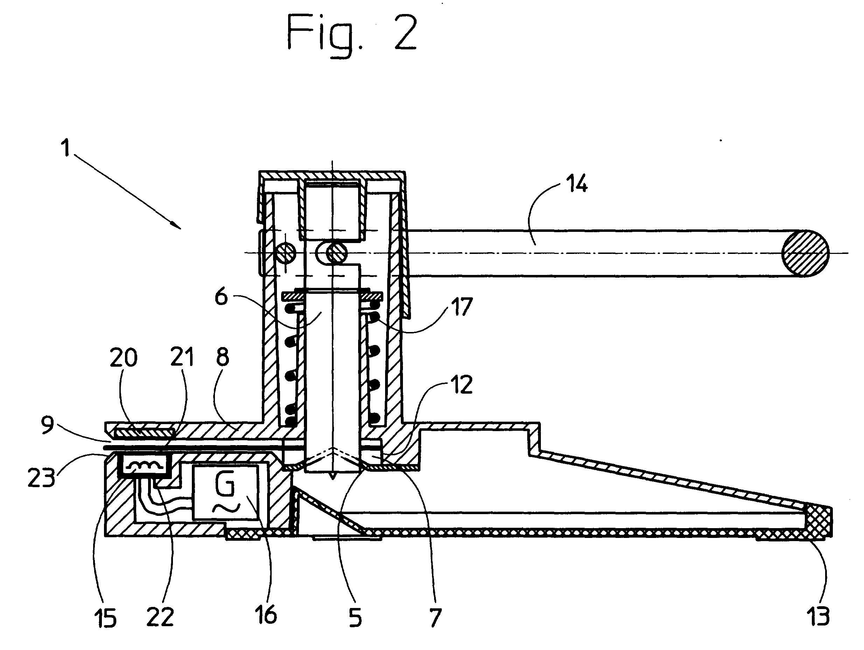

Bei den Ausführungsbeispielen gemäß Fig.1, 4, 5 und 6 ist der Löschmagnet ein Dauermagnet. Im Ausführungsbeispiel gemäß Fig.2 und 3 ist der Löschmagnet 15 hingegen ein Elektromagnet und hat eine entsprechende Stromquelle 16 und gegebenenfalls eine elektrische Schaltung zur Erzeugung eines Wechselstromes. Der zugehörige Schalter 18 und eine Kontrollampe 19 sind in Fig.3 angedeutet. Dabei kann dieser als Elektromagnet gestaltete Löschmagnet 15 ein Gleichstrommagnet sein, ist in diesem Falle jedoch ein Wechselstrommagnet.

In allen Ausführungsbeispielen ist der Löschmagnet 15 dem zu der Aufnahmeöffnung 7 führenden Einführschlitz 9 unmittelbar benachbart, so daß der Magnetstreifen 3 beim Einschieben der Chipkarte 4 mit dem größten Teil seiner Erstreckung oder über seine gesamte Länge an dem Löschmagneten 15 vorbeibewegbar ist, wie man es vor allem in Fig.3 erkennen kann. Dabei hat der Löschmagnet 15 in allen Ausführungsbeispielen von dem den Einführweg für die Chipkarte 4 begrenzenden Anschlag 12 einen Abstand, der kleiner als die Abmessung der Chipkarte 4 in ihrer Einführrichtung ist, wobei aber der Löschmagnet 15 und eine noch zu erläuternde weitere Abschirmung 20 für diesen Löschmagneten 15 das in Einführrichtung zurückliegende Ende des Magnetstreifens 3 bei in Stanzposition eingeschobener Chipkarte beaufschlagt, wie es mit strichpunktierten Linien in Fig.3 dargestellt ist.

Der Löschmagnet 15 ist jeweils in einer Aussparung des Gehäuses 8 angeordnet oder eingelassen und weist außer an seiner der Chipkarte 4 zugewandten Seite oder Fläche 21 ringsum eine Abschirmung 22 insbesondere aus einer magnetisch leitenden Umhüllung, zum Beispiel aus Weicheisen, auf. Die nicht abgeschirmte Seite oder Fläche 21 des Löschmagneten 15 ist dabei mit der Begrenzungswand des Einführschlitzes 9 oder der Aufnahmeöffnung 7 bündig, bildet also gewissermaßen einen Teil dieser Begrenzungswand, was in den Figuren 1, 2, 4 und 5 bei den dort dargestellten Ausführungsbeispielen gut erkennbar ist.

An der Aufnahmeöffnung 7 oder an dem Einführschlitz 9 ist ferner an der der nicht abgeschirmten Seite 21 des Löschmagneten 15 gegenüberliegenden Seite die schon erwähnte weitere Abschirmung 20 aus magnetisch leitendem Werkstoff, zum Beispiel aus Weicheisen, vorgesehen und die Abschirmungen 20 und 22 verhindern unerwünschte Wirkungen auf die Umgebung. Man erkennt vor allem in den Figuren 1, 2, 4 und 5, daß die Chipkarte 4 zwischen dem Löschmagenten 15 und datei dessen nicht abgeschirmter Fläche oder Seite 21 und dieser gegenüberliegenden Abschirmung 20 hindurchbewegt wird, wenn sie in ihre Stanzposition unter das Stanzwerkzeug 6 bewegt oder verschoben wird.

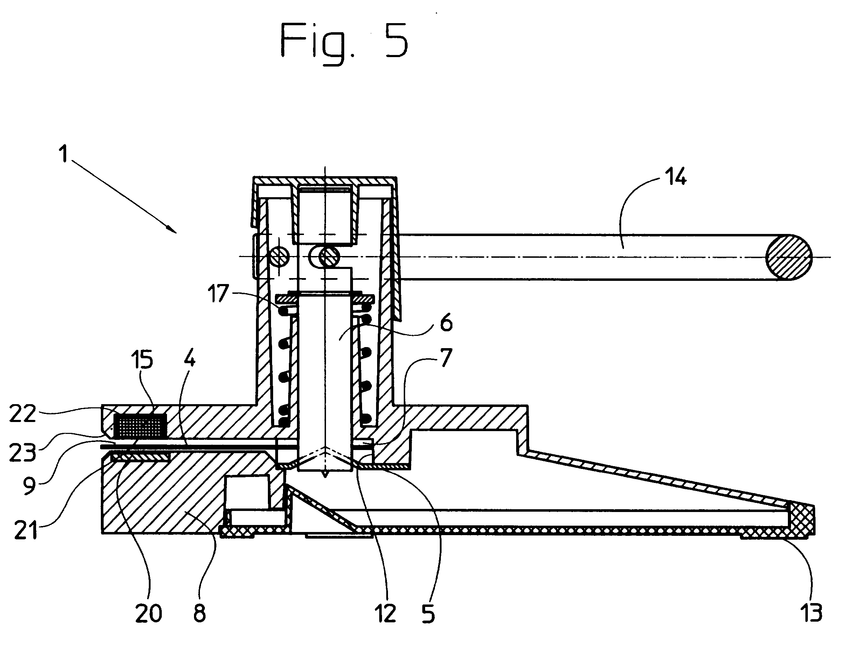

Die Figuren 1, 2 und 4 zeigen dabei Ausführungsbeispiele, bei denen der Löschmagnet 15 unterhalb des Einführschlitzes 9 und der Aufnahmeöffnung 7 und die weitere Abschirmung 20 oberhalb dieser Aufnahmeöffnung 7 angeordnet sind, während Fig.5 eine Ausführungsform mit umgekehrter Anordnung zeigt, bei welcher also der Löschmagnet 15 oberhalb des Weges der Chipkarte 4, also oberhalb des Einzelschlitzes 9 und der Aufnahmeöffnung 7 und die zusätzliche Abschirmung 20 unterhalb angeordnet sind.

Denkbar wäre schließlich noch, daß beidseits des Weges der in Stanzstellung zu verschiebenden Chipkarte 4, also oberhalb und unterhalb, jeweils wenigstens ein Löschmagnet 15 angeordnet sind, die jeweils ihre Abschirmung 22 haben, wobei dann eine weitere oder zusätzliche Abschirmung 20 entfällt.

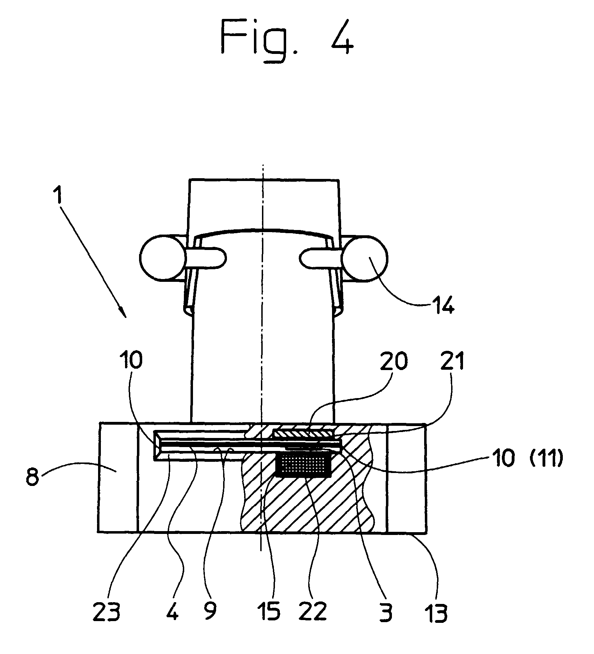

Die Figuren 1, 2 und 5 sowie ferner Fig.4 verdeutlichen, daß die Löschmagnete 15 und die Abschirmungen 20 in Einführrichtung der Chipkarte 4 hinter einem zu dem Einführschlitz 9 bzw. der Aufnahmeöffnung 7 führenden Einführtrichter 23 angeordnet sind. Durch diesen Einführtrichter 23 wird das Zuführen der Chipkarte 4 für den Benutzer erleichtert und die Positionierung auch des Magnetstreifens 3 in Relation zu dem Löschmagneten 15 vereinfacht und automatisiert.

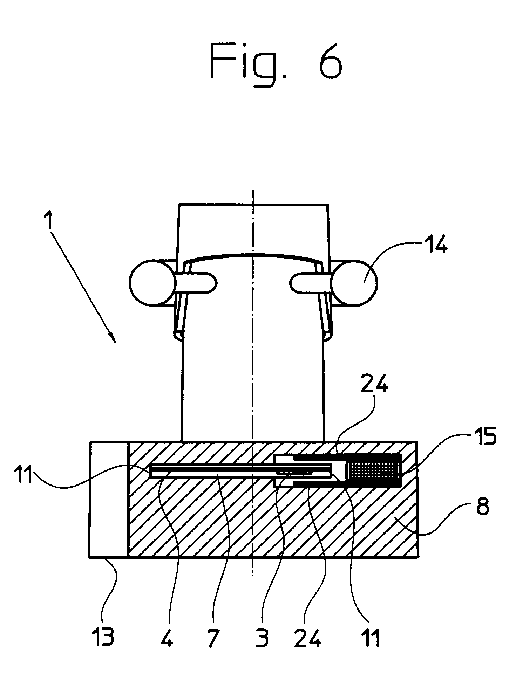

Fig.6 zeigt eine abgewandelte Ausführungsform, bei welcher der Löschmagnet 15 seitlich von einer Schmalseite oder einem Seitenanschlag 11 des Einführschlitzes 9 und der Aufnahmeöffnung 7 angeordnet ist und Joche 24 aufweist, die in den Bereich der Vorrichtung 1 ragen, durch welchen der Magnetstreifen 3 der Chipkarte 4 beim Einführen in die Stanzposition hindurchbewegbar ist, wobei die Joche 24 dabei oberhalb und unterhalb der Aufnahmeöffnung 7 zu liegen kommen. Dabei ist ein Permanentmagnet gezeigt, jedoch könnte auch hier ein Elektromagnet oder ein Wechselstrommagnet vorgesehen sein.

Anhand der Figuren 3 und 4 wird deutlich, daß die quer zur Einführbewegung orientierte Abmessung des jeweiligen Löschmagneten 15 größer als die in dieser Richtung orientierte Breite des Magnetstreifens 3 ist und daß der Löschmagnet 15 in Gebrauchsstellung den Magnetstreifen 3 in dem jeweils beim Vorbeischieben beaufschlagten Bereich beidseits etwa um den gleichen Betrag überragt, so daß eine gute Löschungswirkung erzielt wird.

Dabei ist die der Chipkarte 4 bzw. der Aufnahmeöffnung 7 zugewandte Seite 21 des Löschmagneten 15 in allen Ausführungsbeispielen rund, könnte aber auch rechteckig oder quadratisch sein. Somit ist im Ausführungsbeispiel ein Durchmesser dieser Seite 21 des Löschmagneten 15 quer oder rechtwinklig zur Einschubrichtung der Chipkarte 4 orientiert, um den Magnetstreifen 3 beidseits überragen zu können.

Die Abschirmungen 22 und 20 unterstützen die Bündelung der magnetischen Feldlinien im Bereich der Aufnahmeöffnung 7 und verstärken somit die Löschungswirkung auf den Magnetstreifen 3. Gleichzeitig werden, wie schon erwähnt, unerwünschte Wirkungen auf die Umgebung dadurch weitestgehend vermieden.

Falls eine Plastikkarte mit Magnetstreifen 3 keinen Chip 2 aufweist, kann sie dennoch in der erfindungsgemäßen Vorrichtung 1 entwertet bzw. können die auf dem Magnetstreifen 3 befindlichen Daten gelöscht werden. Auch in diesem Falle wird eine derartige Plastikkarte in der dargestellten Weise in die Vorrichtung 1 eingeschoben, wobei dann durch das Einschieben an dem Löschmagneten 15 vorbei die Daten auf dem Magnetstreifen 3 gelöscht werden. Der Stanzvorgang, der bei einer Chipkarte beim Erreichen des Tiefenanschlages 12 durchgeführt wird, kann in einem solchen Fall allerdings entfallen.

Darüber hinaus kann mit der Vorrichtung 1 natürlich auch der Chip 2 einer Chipkarte 4 ausgestanzt werden, die keinen Magnetstreifen 3 hat. Somit ergibt sich eine universell und immer in gleicher Weise benutzbare Vorrichtung 1, die einfach im Aufbau ist und eine schnelle und vollständige Entwertung selbst solcher Plastikkarten erlaubt, die sowohl einen Chip als auch einen Magnetstreifen aufweisen. Ein mühsames Zerschneiden solcher Plastikkarten von Hand oder eine sonstige unzureichende Zerstörung kann also vermieden werden.

In Fig.3 erkennt man noch, daß das Gehäuse 8 von der Einschubseite der Chipkarte 4 ausgehend seitlich des Löschmagneten 15 ausgespart ist und die Seitenanschläge 11 für die Chipkarte 4 verschieden lang sind. Selbstverständlich verläuft dabei dann der Einführschlitz 9 auch im Bereich dieser Aussparung 25. Dies hat den Vorteil, daß die Chipkarte 4 mit ihrem in Einschubrichtung hinteren Eckbereich, der nicht mit dem Magnetstreifen 3 versehen ist, selbst dann frei zugänglich bleibt, wenn sie in Stanzposition verschoben ist. Um so leichter kann sie gehandhabt und insbesondere auch wieder entnommen werden, wobei gleichzeitig auch die Vorrichtung 1 eine entsprechend kompaktere und platzsparende Form erhält.

Damit also einerseits die Chipkarte 4 beim Entwerten oder Zerstören besser gehandhabt werden kann, trotzdem aber die Daten des Magnetstreifens 3 dem Löschmagneten 15 bzw. dessen Magnetfeld vollständig ausgesetzt werden, ist die dem Löschmagneten 15 nähere Seitenführung 11 länger als die dazu parallele Seitenführung 11, so daß der Löschmagnet 15 in einem Bereich der Vorrichtung 1 angeordnet werden kann, in welchem sich der Magnetstreifen 3 bei vollständig eingeschobener Chipkarte 4 befindet.

Im Ausführungsbeispiel ist in zweckmäßiger Weise die Aussparung 25 durch eine Abschrägung 26 gebildet, die über die gesamte Höhe der Vorrichtung in diesem Bereich verlaufen kann, so daß der Einführschlitz 9 teilweise an dieser Abschrägung 26 verläuft.

Die Vorrichtung 1 ist als Bau- und Handhabungseinheit gleichzeitig eine Chipstanze, mit der Chips 2 aus Chipkarten 4 herausgetrennt werden können, und eine Löschvorrichtung für auf Magnetstreifen 3 solcher Chipkarten 4 gespeicherter Daten. Sie weist dazu eine Aufnahmeöffnung 7 und einen Einführschlitz 9 für die Chipkarte 4, ferner ein Stanzwerkzeug 6 und außerdem einen Löschmagneten 15 auf, an welchem der Magnetstreifen 3 der Chipkarte 4 beim Einschieben in die Stanzposition vorbeibewegt wird. Ist die Stanzposition erreicht, kann der Chip 2 ausgestanzt werden, wonach die Chipkarte 4 sowohl betreffend den Chip als auch die Daten auf dem Magnetstreifen 3 entwertet ist.

Dabei kann in an sich bekannter Weise der Chip 2 bei seinem Ausstanzen gleichzeitig auch zerstört werden.

## Patentansprüche

1. Vorrichtung (1) zum Entfernen oder Abtrennen eines Chips (2) von einer insbesondere einem Recycling-Vorgang zuführbaren, zusätzlich zu dem Chip (2) einen Magnetstreifen (3) für Datenspeicherung aufweisenden Chipkarte (4), mit einem Stanzwerkzeug (6), dessen Umriß oder Querschnitt gleich oder größer als die übliche oder Normgröße eines Chips (2) mit seinen ihm zugehörenden Kontaktflächen oder Kontaktplättchen ist, und mit einer Aufnahmeöffnung (7) für die dem Stanzwerkzeug zuzuführende Chipkarte, **dadurch gekennzeichnet**, daß im Bereich der Aufnahmeöffnung (7) wenigstens ein Löschmagnet (15) angeordnet ist,dessen Magnetfeld den Magnetstreifen (3) der Chipkarte (4) beim Einführen oder Einlegen in die Aufnahmeöffnung (7) ganz oder teilweise beaufschlagt und daß die Vorrichtung (1) einen zu der Aufnahmeöffnung (7) führenden Einführschlitz (9) zum Einschieben der Chipkarte in die Aufnahmeöffnung und in den Bereich des Stanzwerkzeuges aufweist und der/die Löschmagnete (15) an dem Einführschlitz (9) oder diesem unmittelbar benachbart angeordnet ist(sind) und die Chipkarte (4) beim Einschieben mit ihrem Magnetstreifen (3), zumindest mit einem größeren Teil von dessen Erstreckung, an dem/den Löschmagneten (15) vorbeibewegbar ist.

2. Vorrichtung nach Anspruch 1, dadurch gekennzeichnet, daß der/die Löschmagnete ein Dauermagnet(e) (15) und/oder ein Elektromagnet(e) ist(sind).

3. Vorrichtung nach Anspruch 1 oder 2, dadurch gekennzeichnet, daß der Löschmagnet (15) in einer Aussparung angeordnet und außer an seiner der Chipkarte (4) zugewandten Seite (21) ringsum mit einer Abschirmung (22), insbesondere mit einer magnetisch leitenden Umhüllung, zum Beispiel aus Weicheisen, versehen ist.

4. Vorrichtung nach einem der Ansprüche 1 bis 3, dadurch gekennzeichnet, daß die nicht abgeschirmte Seite oder Fläche (21) des/der Löschmagneten (15) mit der Begrenzungswand des Einführschlitzes (9) oder der Aufnahmeöffnung (7) bündig oder geringfügig versenkt ist.

5. Vorrichtung nach einem der Ansprüche 1 bis 4, dadurch gekennzeichnet, daß an der Aufnahmeöffnung (7) oder an dem Einführschlitz (9) an der der nicht abgeschirmten Seite (21) des Löschmagneten (15) gegenüberliegenden Seite oder Begrenzung eine weitere Abschirmung (20) insbesondere aus magnetisch leitendem Werkstoff, zum Beispiel aus Weicheisen, vorgesehen ist und die Chipkarte (4) zwischen dem Löschmagneten (15) und dieser gegenüberliegenden Abschirmung (20) auf ihrem Weg in die Aufnahmeöffnung und unter das Stanzwerkzeug (6) hindurchbewegbar ist.

6. Vorrichtung nach einem der Ansprüche 1 bis 5, dadurch gekennzeichnet, daß der/die Löschmagnete (15) unterhalb des Einführschlitzes (9) und die weitere Abschirmung (20) oberhalb oder der/die Löschmagnete (15) oberhalb des Einführschlitzes (9) und die zusätzliche Abschirmung (20) unterhalb des Einführschlitzes angeordnet sind.

7. Vorrichtung nach einem der Ansprüche 1 bis 6, dadurch gekennzeichnet, daß an dem Einführschlitz beidseitig des Weges der in Stanzstellung zu verschiebenden Chipkarte (4) jeweils wenigstens ein Löschmagnet (15) angeordnet ist.

8. Vorrichtung nach einem der Ansprüche 1 bis 7, dadurch gekennzeichnet, daß der/die Löschmagnete (15) und/oder weitere Abschirmungen (20) in Einführrichtung der Chipkarte (4) hinter einem zu dem Einführschlitz (9) führenden Einführtrichter (23) angeordnet sind.

9. Vorrichtung nach einem der Ansprüche 1 bis 8, dadurch gekennzeichnet, daß das Gehäuse (8) von der Einschubseite der Chipkarte (4) ausgehend seitlich des Löschmagneten (15) ausgespart ist und die Seitenanschläge (11) für die Chipkarte (4) insbesondere verschieden lang sind, wobei die Aussparung (25) des Gehäuses (8) insbesondere durch eine Abschrägung (26) gebildet ist, die vorzugsweise über die gesamte Höhe des Gehäuses an dieser Stelle reicht.

10. Vorrichtung nach Anspruch 9, dadurch gekennzeichnet, daß die dem/den Löschmagneten (15) nähere Seitenführung (11) länger als die dazu parallele Seitenführung (11) ist.

11. Vorrichtung nach einem der Ansprüche 1 bis 10, dadurch gekennzeichnet, daß der/die Löschmagnete (15) seitlich von einer Schmalseite des Einführschlitzes (9) und/oder der Aufnahmeöffnung (7) angeordnet ist/sind und Joche (24) aufweisen, die in den Bereich der Vorrichtung (1) ragen, durch welchen der Magnetstreifen (3) der Chipkarte (4) beim Einführen in die Stanzposition hindurchbewegbar ist.

12. Vorrichtung nach einem der Ansprüche 1 bis 11, dadurch gekennzeichnet, daß der/die Löschmagnete (15) von einem den Einführweg für die Chipkarte (4) begrenzenden Anschlag (12) einen Abstand haben, der kleiner als die Abmessung der Chipkarte (4) in ihrer Einführrichtung ist, wobei der/die Löschmagnete (15) und/oder die weitere Abschirmung (20) das in Einführrichtung zurückliegende Ende des Magnetstreifens (3) bei in Stanzposition eingeschobener Chipkarte beaufschlagt.

13. Vorrichtung nach einem der Ansprüche 1 bis 12 dadurch gekennzeichnet, daß die quer zur Einführbewegung orientierte Abmessung des/der Löschmagnete (15) größer als die in dieser Richtung orientierte Breite des Magnetstreifens (3) ist und daß der/die Löschmagnete (15) in Gebrauchsstellung den Magnetstreifen (3) in dem beaufschlagten Bereich insbesondere beidseits überragt.
